# FASCICULE DE BREVET EUROPEEN

(11) **EP 1 273 787 B1**
(45) Date de publication et mention de la délivrance du brevet: **07.04.2004**
(21) Numéro de dépôt: 02291640.7
(22) Date de dépôt: 01.07.2002
(51) Int. Cl.: F02M 25/07

(54) **Système d'alimentation en gaz d'un moteur diesel de véhicule**
Versorgungssystem einer Dieselbrennkraftmaschine eines Fahrzeuges
Air supply device for a diesel engine in a vehicle

(30) Priorité: 03.07.2001 FR 0108824
(43) Date de publication de la demande: 08.01.2003
(73) Titulaire: Peugeot Citroen Automobiles SA, 92200 Neuilly sur Seine (FR)
(72) Inventeur: Portalier, Jacques, 92100 Boulogne (FR); Alhinc, Nathalie, 78400 Chatou (FR)
(74) Mandataire: Habasque, Etienne Joel Jean-François

(56) Documents cités:
- DE-A- 19 857 577
- US-A- 5 937 651

## Description

La présente invention concerne un système d'alimentation en gaz d'un moteur Diesel de véhicule automobile.

Plus particulièrement, l'invention se rapporte à un tel système qui comporte une arrivée d'air frais et une arrivée de gaz d'échappement à recycler dans le moteur et des moyens de chauffage/refroidissement de ceux-ci, associés à des moyens de contrôle de leur circulation dans ces moyens, sous la commande de moyens de pilotage pour contrôler la température des gaz admis dans le moteur selon les besoins en terme de température de fonctionnement de celui-ci.

L'évolution des technologies liées à la motorisation des véhicules automobiles, telles que par exemple l'ajout de différents systèmes de dépollution des gaz d'échappement de ceux-ci, a conduit à une sévèrisation des besoins en terme de contrôle de la température des gaz en entrée du moteur.

C'est ainsi par exemple qu'il peut convenir de refroidir les gaz d'échappement à recycler dans le moteur, également appelés gaz d'EGR et/ou l'air frais admis dans celui-ci, lorsque le moteur est chaud, comme cela peut être défini pour les phases dites « moteur chaud » des cycles réglementaires de fonctionnement du moteur, afin par exemple de réduire l'émission de Nox.

Par contre, ces gaz d'EGR, de même qu'éventuellement l'air frais admis dans le moteur, peuvent devoir ne pas être refroidis quand le moteur est froid, par exemple dans les phases dites « moteur froid » des cycles réglementaires, afin entre autres de faciliter la montée en température du moteur et des gaz d'échappement pour faciliter l'amorçage par exemple d'un catalyseur intégré dans la ligne d'échappement.

Dans d'autres phases de fonctionnement du moteur, il peut être intéressant de contrôler la température des gaz en entrée du moteur.

L'air frais en entrée du moteur peut par exemple devoir être réchauffé pour assurer une bonne combustion, par exemple lors d'une phase de postcombustion.

Cette multiplication des besoins se traduit par des architectures de plus en plus complexes du système d'alimentation en gaz de ces moteurs.

C'est ainsi par exemple que l'on a été amené à intégrer dans ces systèmes d'alimentation, des refroidisseurs d'air admis associés éventuellement à des papillons de court-circuitage de ceux-ci, en sortie par exemple d'un compresseur, des refroidisseurs de gaz d'EGR associés ou non à des papillons de court-circuitage et des réchauffeurs d'air frais placés en amont par exemple du compresseur ou en parallèle sur le refroidisseur de suralimentation par exemple.

Ces structures relativement complexes nécessitent l'intégration dans le compartiment moteur des véhicules d'un nombre croissant d'organes et de conduits de raccordement de ceux-ci, ce qui se traduit notamment par des problèmes d'implantation, de fiabilité et de coût.

Le but de l'invention est donc de résoudre ces problèmes.

A cet effet, l'invention a pour objet un système d'alimentation en gaz d'un moteur Diesel de véhicule automobile, du type comportant une arrivée d'air frais et une arrivée de gaz d'échappement à recycler dans le moteur et des moyens de chauffage/refroidissement de ceux-ci associés à des moyens de contrôle de leur circulation dans ces moyens, sous la commande de moyens de pilotage pour contrôler la température des gaz admis dans le moteur selon les besoins en terme de température de fonctionnement de celui-ci, caractérisé en ce qu'il comporte deux branches de circulation des gaz s'étendant entre l'arrivée d'air frais et le moteur dont l'une comporte un refroidisseur, dont l'entrée est raccordée à l'arrivée d'air frais et dont la sortie est reliée à l'entrée d'un premier papillon, dont la sortie est reliée au moteur et dont l'autre branche comporte un second papillon, dont l'entrée est raccordée à l'arrivée d'air frais et dont la sortie est reliée à l'entrée d'un échangeur de chaleur dont la sortie est reliée avec la sortie du premier papillon, au moteur, et en ce que l'arrivée des gaz d'échappement à recycler est raccordée à travers une vanne de contrôle à l'autre branche de circulation, entre le second papillon et l'échangeur.

Selon une autre caractéristique, lorsque le moteur est froid, les moyens de commande sont adaptés pour ouvrir la vanne de contrôle et le second papillon, et fermer le premier papillon, de manière à amener l'air frais à se mélanger aux gaz à recycler avant leur passage dans l'échangeur de chaleur et leur entrée dans le moteur.

Selon une autre caractéristique, lorsque le moteur est chaud, les moyens de pilotage sont adaptés pour ouvrir la vanne de contrôle et le premier papillon et fermer le second papillon, de manière à amener les gaz à recycler à circuler dans l'échangeur de chaleur avant d'être mélangés à l'air frais en sortie du refroidisseur avant d'être introduits dans le moteur.

Selon une autre caractéristique, les moyens de pilotage sont adaptés pour mettre en oeuvre une phase de contrôle de la température des gaz en entrée du moteur, sans recyclage de gaz d'échappement, en fermant la vanne de contrôle et en régulant l'ouverture/fermeture des premier et second papillons afin de réguler la circulation d'air dans le refroidisseur et l'échangeur de chaleur, pour réguler la température de l'air admis dans le moteur.

L'invention sera mieux comprise à la lecture de la description qui va suivre, donnée uniquement à titre d'exemple et faite en se référant aux dessins annexés, sur lesquels :
- la Fig.1 représente un schéma synoptique d'une architecture d'un système d'alimentation en gaz d'un moteur, selon l'état de la technique ; et
- la Fig.2 représente un schéma synoptique d'une architecture d'un système d'alimentation en gaz d'un moteur, selon l'invention.

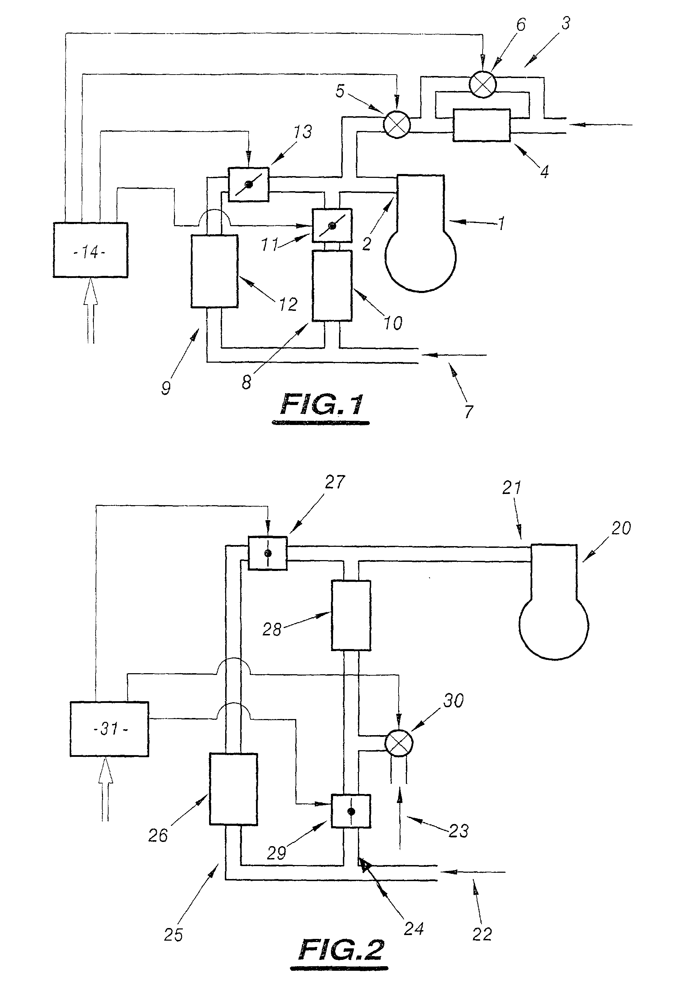

On a en effet représenté sur la figure 1, un système d'alimentation en gaz d'un moteur Diesel de véhicule automobile, de l'état de la technique.

Sur cette figure 1, le moteur est désigné par la référence générale 1 et son entrée de gaz est désignée par la référence générale 2.

Ce moteur est associé à un circuit d'EGR désigné par la référence générale 3, qui, à partir d'une arrivé de gaz d'échappement à recycler dans le moteur, comporte un refroidisseur de gaz d'EGR désigné par la référence générale 4, associé à une vanne de contrôle ou d'EGR désignée par la référence générale 5.

Une vanne de court-circuitage de ce refroidisseur peut être dans certaines applications connectée en parallèle sur celui-ci et est désignée par la référence générale 6.

La sortie de la vanne d'EGR est reliée en entrée du moteur.

Ce refroidisseur de gaz d'EGR peut suivant le cas être court-circuité afin de permettre de ne pas refroidir les gaz lorsque le moteur est froid et au contraire de refroidir ceux-ci lorsque le moteur est chaud.

Par ailleurs, ce système comporte également deux branches de circulation de gaz s'étendant entre une arrivée d'air frais, désignée par la référence générale 7 sur cette figure, en sortie par exemple d'un compresseur, et l'entrée 2 du moteur.

Ces branches sont désignées par les références générales 8 et 9 sur ces figures et comportent, l'une, par exemple la branche 8, un réchauffeur d'air d'entrée du moteur désigné par la référence générale 10, associé à l'entrée du moteur à travers un papillon commandé désigné par la référence générale 11.

Ce réchauffeur d'air d'entrée du moteur qui peut par exemple être formé par un échangeur air/liquide ou un réchauffeur électrique, peut être positionné en aval ou en amont du compresseur et être court-circuitable par un système de désactivation.

Ce réchauffeur assure le réchauffage ou non de l'air en entrée du moteur selon que celui-ci est froid ou chaud, par exemple pour stabiliser la combustion dans celui-ci.

L'autre branche de circulation désignée par la référence générale 9 comporte quant à elle, un refroidisseur d'air d'entrée du moteur désigné par la référence générale 12 sur cette figure, associé à l'entrée 2 du moteur à travers un papillon commandé désigné par la référence générale 13.

Ce refroidisseur est présent ou non selon les applications envisagées et est destiné à refroidir l'air en entrée du moteur pour des problèmes de remplissage et d'émission de Nox.

L'ensemble des papillons et des vannes décrites précédemment, est commandé à partir de moyens de pilotage désignés par la référence générale 14 sur cette figure, à partir d'informations acquises par des capteurs de façon classique.

On conçoit que ces différents moyens de chauffage/refroidissement sont associés à de multiples conduits, vannes et/ou papillons, permettant d'activer ou de désactiver chacune des fonctions correspondantes, ce qui présente les inconvénients mentionnés précédemment.

On a représenté sur la figure 2, un système selon l'invention.

Sur cette figure 2, le moteur est désigné par la référence générale 20 et son entrée de gaz est désignée par la référence générale 21.

L'arrivée d'air frais est désignée par la référence générale 22, par exemple en provenance d'un compresseur et l'arrivée des gaz d'échappement à recycler dans le moteur est désignée par la référence générale 23.

En fait, ce système comporte également deux branches de circulation des gaz qui s'étendent entre l'arrivée d'air frais et le moteur, ces branches étant désignées par les références 24 et 25.

L'une des branches, à savoir la branche 25, comporte un refroidisseur désigné par la référence générale 26, dont l'entrée est reliée à l'arrivée d'air frais 22 et dont la sortie est reliée à l'entrée d'un premier papillon commandé désigné par la référence générale 27, dont la sortie est reliée à l'entrée 21 du moteur.

L'autre branche, à savoir la branche 24, comporte un échangeur de chaleur par exemple air/liquide désigné par la référence générale 28 et un second papillon commandé 29. L'entrée de ce second papillon 29 est reliée à l'arrivée d'air frais 22 et sa sortie est reliée à l'entrée de l'échangeur de chaleur 28, dont la sortie est reliée avec la sortie du premier papillon 27, à l'entrée 21 du moteur.

L'arrivée des gaz d'échappement à recycler 23 est quant à elle raccordée à travers une vanne de contrôle ou d'EGR désignée par la référence générale 30, à l'autre branche 24, entre le second papillon 29 et l'échangeur 28.

La vanne d'EGR, le premier papillon et le second papillon sont commandés par des moyens de pilotage désignés par la référence générale 31.

Le fonctionnement de ce système peut être découpé en trois phases, qui correspondent aux trois fonctions assurées par le système. L'une des phases peut être associée à la phase dite froide du cycle de fonctionnement du moteur, une autre, à la phase dite chaude du cycle de fonctionnement du moteur et la dernière phase pouvant être une phase de contrôle de la température des gaz en entrée du moteur par exemple par stabilisation de la combustion sans recyclage des gaz d'échappement.

Lors de la phase froide du cycle, les besoins sont de ne pas refroidir les gaz d'EGR et de ne pas refroidir l'air frais délivré par exemple par la sortie du compresseur.

Ceci est réalisé par les moyens de pilotage 31 en ouvrant la vanne d'EGR 30 et le second papillon 29 tout en fermant le premier papillon 27.

Les gaz d'EGR se mélangent alors à l'air frais en amont de l'échangeur 28 avant de passer dans celui-ci où le mélange peut subir un léger refroidissement.

Le mélange d'air frais et de gaz d'EGR sera en effet à une température inférieure à la température des gaz d'EGR seuls. Donc, il y aura peu d'échange thermique au niveau de l'échangeur et la chute de température sera moindre que dans les systèmes classiques où l'air frais passe dans un refroidisseur.

Lors de la phase chaude du cycle, les besoins sont de refroidir les gaz d'EGR, de même que l'air frais admis, par exemple en sortie du compresseur.

Dans ce cas, la vanne d'EGR 30 est ouverte, de même que le premier papillon 27, tandis que le second papillon 29 est fermé.

Les gaz d'EGR sont alors amenés à traverser l'échangeur de chaleur 28 et sont alors refroidis. L'air frais traverse quant à lui le refroidisseur 26. L'air frais et les gaz d'EGR se mélangent alors en sortie de l'échangeur et du refroidisseur avant d'être injectés dans le moteur.

Lors de la troisième phase, dite de contrôle de la température des gaz en entrée du moteur sans recyclage d'EGR, il n'y a pas de recyclage des gaz d'échappement dans le moteur et il convient de pouvoir choisir de chauffer ou de refroidir les gaz en entrée du moteur.

Ceci est alors obtenu par contrôle de l'ouverture/fermeture du premier et du second papillons, la vanne de contrôle 30 étant fermée.

Plus particulièrement, on peut décider d'une ouverture totale ou partielle du second papillon 29 et une fermeture totale ou partielle du premier papillon 27.

Ainsi, une partie de l'air frais est réchauffée, tandis qu'une autre partie est refroidie, ce qui permet en régulant l'ouverture/fermeture de ces papillons, de contrôler la répartition du flux d'air froid/chaud et donc la température de l'air en entrée du moteur.

On conçoit alors qu'une telle structure est beaucoup plus simple que celles utilisées dans l'état de la technique, pour remplir les mêmes fonctions.

En effet, le nombre d'organes et de conduits est réduit par rapport à l'état de la technique.

## Revendications

1. Système d'alimentation en gaz d'un moteur Diesel de véhicule automobile, du type comportant une arrivée d'air frais (22) et une arrivée de gaz d'échappement (23) à recycler dans le moteur (20) et des moyens (26,28) de chauffage/refroidissement de ceux-ci associés à des moyens (27,29,30) de contrôle de leur circulation dans ces moyens, sous la commande de moyens de pilotage (31) pour contrôler la température des gaz admis dans le moteur selon les besoins en terme de température de fonctionnement de celui-ci, **caractérisé en ce qu'**il comporte deux branches (24,25) de circulation des gaz s'étendant entre l'arrivée d'air frais (22) et le moteur (20) dont l'une (25) comporte un refroidisseur (26), dont l'entrée est raccordée à l'arrivée d'air frais et dont la sortie est reliée à l'entrée d'un premier papillon (27), dont la sortie est reliée au moteur et dont l'autre branche (24) comporte un second papillon (29), dont l'entrée est raccordée à l'entrée d'air frais et dont la sortie est reliée à l'entrée d'un échangeur de chaleur (28) dont la sortie est reliée avec la sortie du premier papillon, au moteur, et **en ce que** l'arrivée des gaz d'échappement à recycler (23) est raccordée à travers une vanne de contrôle (30) à l'autre branche (24) de circulation, entre le second papillon (29) et l'échangeur (28).

2. Système selon la revendication 1, **caractérisé en ce que** lorsque le moteur est froid, les moyens de commande (31) sont adaptés pour ouvrir la vanne de contrôle (30) et le second papillon (29), et fermer le premier papillon (27), de manière à amener l'air frais à se mélanger aux gaz à recycler avant leur passage dans l'échangeur de chaleur (28) et leur entrée dans le moteur.

3. Système selon la revendication 1 ou 2, **caractérisé en ce que** lorsque le moteur est chaud, les moyens de pilotage (31) sont adaptés pour ouvrir la vanne de contrôle (30) et le premier papillon (27) et fermer le second papillon (29), de manière à amener les gaz à recycler à circuler dans l'échangeur de chaleur (28) avant d'être mélangés à l'air frais en sortie du refroidisseur (26) avant d'être introduits dans le moteur.

4. Système selon l'une quelconque des revendications précédentes, **caractérisé en ce que** les moyens de pilotage (31) sont adaptés pour mettre en oeuvre une phase de contrôle de la température des gaz en entrée du moteur, sans recyclage de gaz d'échappement, en fermant la vanne de contrôle (30) et en régulant l'ouverture/fermeture des premier et second papillons (27,29) afin de réguler la circulation d'air dans le refroidisseur et l'échangeur de chaleur, pour réguler la température de l'air admis dans le moteur.

## Patentansprüche

1. Gasversorgungssystem eines Dieselmotors eines Kraftfahrzeuges, aufweisend einen Einlass für Frischluft (22) und einen Einlass für in den Motor (20) zurückzuführendes Abgas (23), und Heiz-/Kühl-Vorrichtungen (26,28) von diesen, welche mit unter dem Befehl von Lenkvorrichtungen (31) stehenden Fluss-Steuervorrichtungen (27,29,30) für diese Vorrichtungen verbunden sind, um die Temperatur der in den Motor eingelassenen Gase gemäß den Bedürfnissen seiner Arbeitstemperatur zu steuern, **dadurch gekennzeichnet, dass** es zwei sich zwischen dem Frischlufteinlass (22) und dem Motor (20) erstreckende Gaszirkulations-Zweige (24,25) aufweist, von denen einer (25) eine Kühlvorrichtung (26) aufweist, deren Eingang mit dem Frischlufteinlass verbunden ist und deren Ausgang mit dem Eingang eines ersten Klappenventils (27) verbunden ist, dessen Ausgang mit dem Motor verbunden ist, und.dessen anderer Zweig (24) ein zweites Klappenventil (29) aufweist, dessen Eingang mit dem Frischlufteinlass verbunden ist, und dessen Ausgang mit dem Eingang eines Wärmetauschers (28) verbunden ist, dessen Ausgang mit dem motorseitigen Ausgang des ersten Klappenventils verbunden ist, und dadurch, dass der Einlass der rückzuführenden Abgase (23) durch ein Steuerventil (30) hindurch zwischen dem zweiten Klappenventil (29) und dem Wärmetauscher (28) mit dem anderen Zirkulations-Zweig (24) verbunden ist.

2. System gemäß Anspruch 1, **dadurch gekennzeichnet, dass** bei kaltem Motor die Lenkvorrichtungen (31) derart eingerichtet sind, dass sie das Steuerventil (30) und das zweite Klappenventil (29) öffnen können, und das erste Steuerventil (27) schließen können, um der Frischluft rückzuführendes Abgas unterzumischen, bevor diese den Wärmetauscher (28) durchläuft und in den Motor eintritt.

3. System gemäß einem der Ansprüche 1 oder 2, **dadurch gekennzeichnet, dass** bei warmem Motor die Lenkvorrichtungen (31) derart eingerichtet sind, dass sie das Steuerventil (30) und das erste Klappenventil (27) öffnen können und das zweite Klappenventil (29) schließen können, um die rückzuführenden Gase derart zuzuführen, dass diese den Wärmetauscher (28) durchlaufen bevor sie mit der aus der Kühlvorrichtung (26) austretenden Frischluft vermischt in den Motor eingeleitet werden.

4. System gemäß einem der vorhergehenden Ansprüche, **dadurch gekennzeichnet, dass** die Lenkvorrichtungen (31) derart eingerichtet sind, dass sie, um die Temperatur der in den Motor eingelassenen Luft zu steuern ohne Abgas zurückzuführen durch Schließen des Steuerventils (30) und durch Steuern des Öffnens/Schließens des ersten und des zweiten Klappenventils (27,29) eine Steuerphase der Temperatur der Gase am Einlass des Motors durchführen, um die Zirkulation der Luft in der Kühlvorrichtung und in dem Wärmetauscher zu steuern.

## Claims

1. Air supply system for a diesel engine of a vehicle, of the type which has a fresh air inlet (22) and an inlet for exhaust gases (23) to be recycled in the engine (20) and means (26, 28) of heating/cooling them associated with means (27, 29, 30) of controlling their circulation in these means, under the control of piloting means (31) for controlling the temperature of the gases admitted into the engine as required in terms of the latter's operating temperature, **characterised in that** it has two gas circulation lines (24, 25) extending between the fresh air inlet (22) and the engine (20), one of them (25) having a cooler (26), the inlet of which is connected to the fresh air intake and the outlet of which is connected to the inlet of a first throttle valve (27), the outlet of which is connected to the engine and with the other line (24) having a second throttle valve (29), the inlet of which is connected to the fresh air inlet and the outlet of which is connected to the inlet of a heat exchanger (28), the outlet of which is connected with the outlet of the first throttle valve, to the engine, and **in that** the inlet of the exhaust gases to be recycled (23) is connected through a control valve (30) to the other circulation line (24), between the second throttle valve (29) and the heat exchanger (28).

2. System according to Claim 1, **characterised in that** when the engine is cold, the control means (31) are adapted to open the control valve (30) and the second throttle valve (29) and close the first throttle valve (27), so as to bring the fresh air to be mixed to the gases to be recycled before they pass into the heat exchanger (28) and enter the engine.

3. System according to Claim 1 or 2, **characterised in that** when the engine is hot, the piloting means (31) are adapted to open the control valve (30) and the first throttle valve (27) and close the second throttle valve (29) so as to bring the gases to be recycled to be circulated in the heat exchanger (28) before being mixed with the fresh air at the outlet of the cooler (26) before going into the engine.

4. System according to any one of the foregoing claims, **characterised in that** the piloting means (31) are adapted to bring into service a phase for controlling the temperature of the gases at the inlet to the engine, without recycling of exhaust gases, by closing the control valve (30) and regulating the opening/closing of the first and second throttle valves (27, 29) so as to regulate the air circulation in the cooler and the heat exchanger, in order to regulate the temperature of the air admitted into the engine.
